(19) **Europäisches Patentamt
European Patent Office
Office européen des brevets**

(11) **EP 4 327 157 B1**

(12) **EUROPEAN PATENT SPECIFICATION**

(45) Date of publication and mention
of the grant of the patent:
**29.07.2026 Bulletin 2026/31**

(21) Application number: **22734675.6**

(22) Date of filing: **21.04.2022**

(51) International Patent Classification (IPC):
*G02B 27/01* (2006.01)    *G02B 5/22* (2006.01)
*B60K 35/23* (2024.01)    *B60K 35/40* (2024.01)
*B60K 35/60* (2024.01)

(52) Cooperative Patent Classification (CPC):
**G02B 27/0101; B60K 35/23; B60K 35/425;
B60K 35/60; G02B 5/223;** B60K 2360/25;
B60K 2360/336; B60K 2360/785; G02B 2027/012

(86) International application number:
**PCT/HU2022/050034**

(87) International publication number:
**WO 2022/224000 (27.10.2022 Gazette 2022/43)**

(54) **HUD SYSTEM WITH REDUCED REFLECTION AND A METHOD OF REDUCING THE REFLECTION OF A HUD SYSTEM**

HUD-SYSTEM MIT VERRINGERTER REFLEXION SOWIE EIN VERFAHREN ZUR REDUZIERUNG DER REFLEXION EINES HUD-SYSTEMS

AFFICHAGE TETE HAUTE AVEC REFLECTION REDUITE ET METHODE POUR REDUIRE LES REFLETS DANS UN AFFICHAGE TETE HAUTE.

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.04.2021 HU 2100167**

(43) Date of publication of application:
**28.02.2024 Bulletin 2024/09**

(73) Proprietor: **Budapesti Müszaki és
Gazdaságtudományi Egyetem
1111 Budapest (HU)**

(72) Inventors:
• **SULYOK, Ábel
2040 Budaörs (HU)**
• **KOPPA, Pál
2040 Budaörs (HU)**

(74) Representative: **Kacsuk, Zsófia
Üteg u. 11/a
1139 Budapest (HU)**

(56) References cited:
**DE-A1- 102015 224 939    DE-A1- 102018 209 934
DE-A1- 102018 213 061**

**Description**

The present invention relates to a HUD system with reduced reflection, which comprises an image display device and a reflecting element which are fixed and angled relative to each other, the image display device being adapted to generate imaging light cones radiating from points of an image generated thereby and reflected from the reflecting element, which imaging light cones have their axes pointing towards a designed detection point after reflection from the reflecting element, and wherein the imaging light cones illuminate a designed detection area in a plane passing through the detection point.

The invention also relates to a method of reducing the reflection of a HUD system.

The HUD was originally developed for the military with the aim of keeping the pilot watching the route and not having to look in any other direction. In contrast, with a traditional head-down display (HDD), one must look regularly at the dashboard and focus suddenly close after looking into the distance, which can be tiring. The head-up display also solves the problem of having to focus close by making a distant image plane. Originally military technology, it has now also appeared in the automotive industry and became available to civilian users. By projecting an image onto a reflective element, in other words combiner (such as a special windscreen or a special plate specially equipped for this purpose), the driver is able to obtain information while driving about speed, navigation, radio settings, error messages and other driving information which he or she would normally have to find by looking at the dashboard. In addition, dangerous situations (e.g. roadblocks, road bends in poor visibility conditions, pedestrians stepping off sidewalks, etc.) can also be visually predicted. Currently, the HUD system is found mainly in luxury cars, but the range of applications is expanding rapidly.

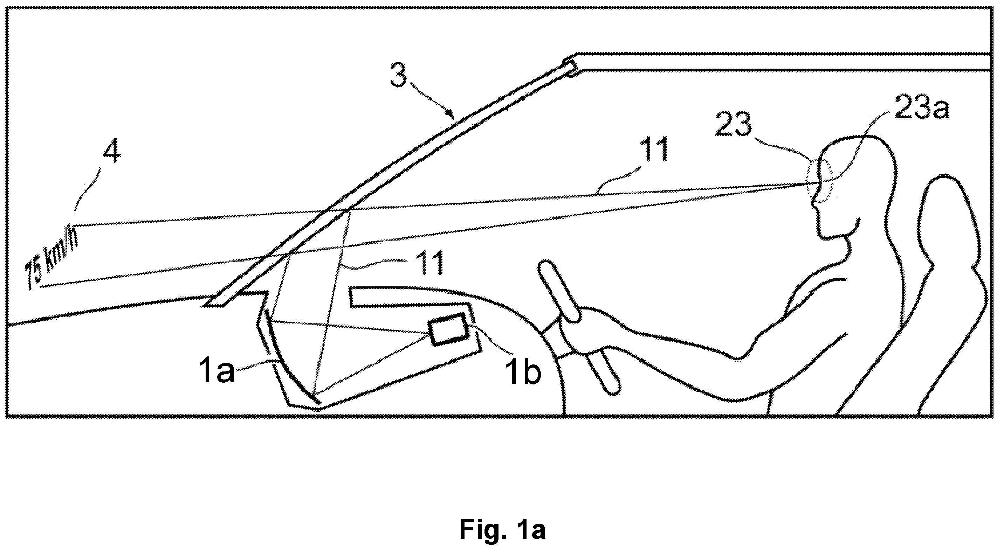

The most common HUD solution installed in a vehicle (see Fig. 1a) essentially consists of an image display device 1 containing a mirror 1a and a projector 1b and an aspherical mirror 2, where the reflecting element 3 is the windscreen. The aspherical mirror 1a in this embodiment is intended to both correct the distortion of the reflecting element 3 curved by the windscreen design and focus the scattering rays of the image display device 1 formed as a projector 1 to form a distant image plane and create projected images 4 that the driver can see "floating" in front of the vehicle at a comfortable distance. An image display device (also known as a projection unit) typically produces an image with a width dimension in a first direction and a height dimension in a second direction substantially perpendicular to that direction. The light rays emitted therefrom are transmitted through additional deflecting optical elements to the reflecting element (i.e. the windscreen), which has transmissive and reflecting properties, from where the reflected or transmitted light is transmitted to the user's eyes. One of the main drawbacks of mirror-based solutions is that as the image area increases, so does the volume of the projection unit recessed in the dashboard. For example, a full windscreen projection system using this principle would require windscreen-sized mirrors, which are impractical due to their space requirements, potential vibrations, fragility and high cost. Moreover, a large mirror in a moving vehicle will in any case vibrate, making the image appear blurred and unenjoyable.

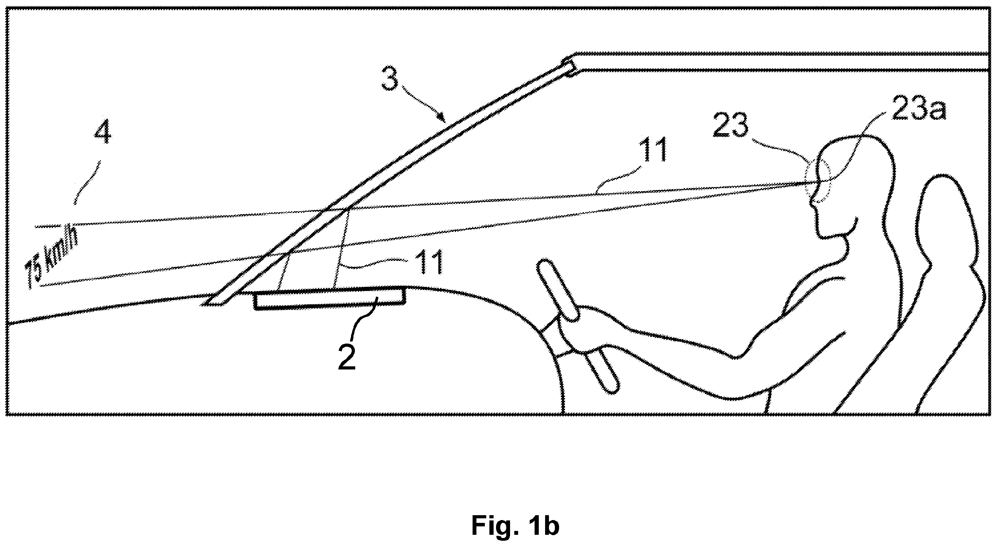

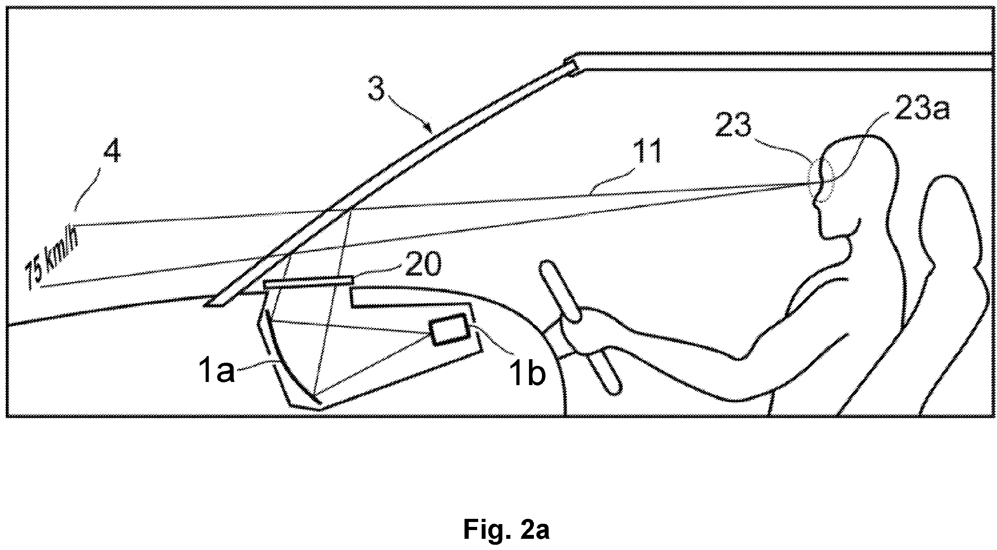

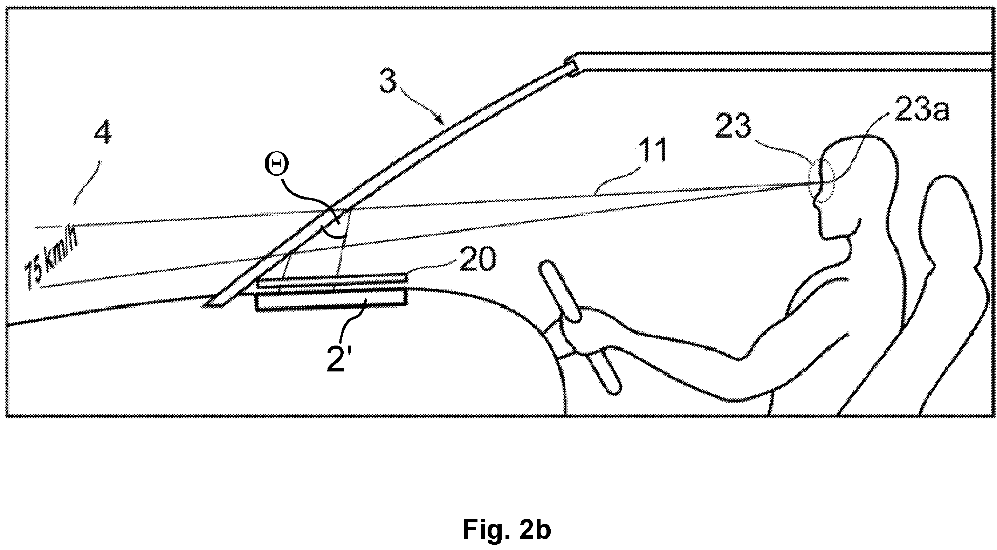

To overcome these drawbacks, HUD systems have started to use direction-selective screens instead of mirrors and large optical aids (Figure 1b). The idea behind this solution is that the axes of the light cones emitted by each pixel on the screen are aligned so that, after reflection off the windscreen, they point to an imaginary bisector point between the driver's two eyes. Such a display module capable of direction-selective illumination and a HUD system incorporating such a display module are described, for example, in patent document US 2014/0063359 A1. The description of the document and Figure 2 disclose an embodiment wherein a flat display comprises an LCD panel, a plurality of light sources, such as LCD chips, and a micro-optical matrix arranged between the LCD panel and the light sources. The micro-optical matrix is configured to direct and focus light beams from the light sources into the plane of the driver's eye (i.e. the eye-box). The pixels of the LCD panel shown here do not emit light in one direction, but in "light cones" with a finite angular range. The micro-optical matrix is designed so that the light cones emitted by the different pixels on the screen intersect in the eye-box, the plane of the driver's eye. With this arrangement and a screen capable of direction-selective illumination, the size of the HUD system can be reduced.

We have recognised that all of the above mentioned solutions, but especially HUD systems with directional-selective flat screens, have a problem with the reflection of ambient light (e.g. sunlight, street lights, etc.) from the display device back into the driver's eyes. Such reflections can significantly degrade the user experience. In addition, sunlight on the image display device may cause the device to heat up and, in some cases, malfunction.

We have also recognised that only those light cones generated by the image display device whose axes, after reflection from the reflecting element, point in the direction of the designed detection point, and which illuminate the designed detection region, the eye-box, in the plane passing through the detection point, are involved in the imaging. In contrast, the axes of the light beams responsible for the reflection, which are reflected from the imaging device (hereinafter referred to as 'reflection light cones'), are randomly oriented at typically different angles to the axes of the imaging cones.

The invention is based on the recognition that a suitably designed direction-selective light filter arranged in the light path between the image display device and the reflecting element can be used to substantially reduce the light radiation incident on the surface of the image display device and to block the light rays reflected from the surface of the image display device without blocking the imaging light rays emitted by the image display device. In this way, distracting reflections of ambient light can be significantly reduced, the contrast ratio of the image produced by the HUD system can be increased and the heating of the image display device can be reduced.

We have also recognised that for flat-screen HUD systems, it is advantageous to arrange the screen and the reflective element relative to each other in such a way that the axes of the imaging light cones are nowhere perpendicular to the screen plane, but exit at a different angle $\Omega$. Thus, if the direction-selective light filter is of the proper height, ambient light cannot be reflected from the screen at any angle of incidence, i.e. the direction-selective filter and the screen together form a complete light barrier against disturbing ambient light.

We have also recognised that such a direction-selective light filter can be created, for example, from a "black" material with high light absorption and a microscopically rough surface by forming a plurality of light guiding channels in the direction-selective light filter, the channels are sized and oriented in accordance with the imaging light cones, such that the channels do not obstruct the imaging light cones entering them, but block the reflection light cones reflecting from the image display device.

It is an object of the present invention to provide an apparatus and method which is free from the disadvantages of the prior art. The object of the invention is to improve the image quality and contrast ratio of the current HUD systems, in particular to reduce the reflection from the image display device, and to reduce the heating of the image display device.

According to the invention, this object is achieved by a HUD system according to claim 1, which comprises an image display device and a reflecting element fixed and arranged at an angle thereto. The image display device being adapted to generate imaging light cones radiating from points of an image generated thereby and reflected from the reflecting element, which imaging light cones have their axes pointing towards a designed detection point after reflection from the reflecting element, and wherein the imaging light cones illuminate a designed detection area in a plane passing through the detection point. A direction-selective light filter is arranged in the light path between the image display device and the reflecting element.

According to the essence of the invention, in the direction-selective light filter, a plurality of light guiding channels passing through the direction-selective light filter are arranged such that each of the channels is configured to substantially pass imaging light cones entering the respective channel, and to substantially block reflection light cones reflected by the image display device towards the reflecting element, which have axes at different angles to the axes of the imaging cones.

The object is further achieved by a method of reducing the reflection of a HUD system according to claim 13. Some preferred embodiments of the invention are defined in the dependent claims. Further details of the invention will be described with reference to the accompanying drawings. In the drawing is

Figure 1a is a schematic side view of a prior art mirror-HUD system;
Figure 1b is a schematic side view of a prior art flat screen HUD system;
Figure 2a is a schematic side view of an exemplary embodiment of a HUD system not according to the present invention;
Figure 2b is a schematic side view of another exemplary embodiment of a HUD system according to the present invention;
Figure 3 is a schematic side view illustrating the formation of the detection area in the HUD system shown in Figure 2b;
Figure 4a is a schematic drawing of an exemplary embodiment of a direction-selective light filter according to the invention comprising rectangular light guiding channels according to the invention;
Figure 4b is a schematic A-A sectional view of the direction-selective light filter shown in Figure 4a;
Figure 5a is a schematic drawing of an exemplary embodiment of a direction-selective light filter according to the invention comprising circular cross-section light guide channels;
Figure 5b is a schematic A-A sectional view of the direction-selective light filter shown in Figure 5a;
Figure 6a is a schematic drawing of an exemplary embodiment of a direction-selective light filter according to the invention comprising square cross-sectional channels;
Figure 6b is a schematic A-A sectional view of the direction-selective light filter shown in Figure 6a;
Figure 7 is a schematic sectional view illustrating the transmission of imaging light cones and the blocking of reflection light cones in a light guide channel according to the present invention.

Figures 1a and 1b show the state of the art HUD systems and their problems, which are described in detail earlier in this document. For the sake of clarity and ease of understanding, the figures already described will be referred to only where necessary.

Figures 2a and 2b show exemplary embodiments of a HUD system 100, wherein the system 100 comprises an image display device 1 and a reflective element 3 fixed and angled relative to the image display device 1. **In** the illustrated embodiments, the reflective element 3 is provided as a windshield of a motor vehicle, however, the reflective element 3 may be a windshield of another vehicle (e.g., an aircraft) or a specially designed transparent surface suitable for reflecting the image produced by the image display device 1, as is apparent to the person skilled in the art. The reflective element 3 may be flat or even curved and may includes elements commonly used in HUD systems 100, such as reflective or anti-reflective layers, etc. It is further noted that in the light path between the image display device 1 and the reflective element 3, additional known elements, such as one or more polarizing elements, etc., may be arranged, which are not the subject of the present application and are therefore not shown in the figures.

The term image display device 1 is to be construed broadly and includes, for example, an optical system with mirror 1a and projector 1b shown in Figure 2a, or in the invention screen 2 with no other optical elements, arranged at an angle $\alpha$ with the reflecting element 3. In the former case the projector 1a produces the image, in the latter case the screen 2 itself produces the image. In both cases, however, the image-forming units (pixels) of projector 1a and screen 2 do not emit light in one direction, but in a light cone with a finite angular range. It is noted that, in the context of the present invention, the term light cone includes light beams propagating in a solid angle with a cross-section other than circular (e.g. ellipse, rectangle, etc.). A light cone with an ellipse or a rectangular cross-section can be characterized by more than one angle of aperture.

By default, the pixels of the image display device 1 emit light cones in different directions. However, only those light cones whose axes T, after reflection from the reflecting element 3, point in the direction of a designed detection point 23a of the HUD system 100 and which illuminate a designed detection area 23 (eye-box) intersecting the plane passing through the detection point 23a, are essentially involved in the creation of the image to be displayed by the HUD system 100. In other words, only these light cones reach the hypothetical user viewing from point 23a. These light cones are referred to hereafter as imaging light cones 11. Thus, the image display device 1 according to the invention is configured to generate imaging light cones 11 emanating from the points of the image generated by the device 1 and reflecting from the reflecting element 3. In the particularly preferred embodiment shown in Figure 2b, the image display device 1 is configured as a direction-selective light emitting screen 2' configured to generate the imaging light cones 11, i.e., the light cones emitted by the pixels of the display are substantially all imaging light cones 11. Such a direction-selective light emitting screen 2' can be created, for example, by appropriate backlight design for LCD based screens 2', or by using a micro-lens matrix for active light emitting screens 2' (e.g. OLED, MicroLED) as is known to the person skilled in the art.

In the context of the present description, the designed detection area 23 is a range of spatial positions from which the user is expected to view the image generated by the HUD system, so it is a design parameter. Accordingly, the location and size of the designed detection area 23 depends on the environment of the HUD system 100. For example, for a HUD system 100 designed for a particular type of vehicle, the designed detection area 23 will depend on the relative positions of the driver's seat and the windshield. In practice, for example, the position of the eyes of users (drivers) of different heights when they are seated in the driver's seat in the driving position (i.e., when the seat height and distance are adjusted to allow comfortable driving) may be determined. The designed detection area 23 may be considered to be a spatial range that includes determined eye positions, and for example, the center of the designed detection area 23 may be considered to be the designed detection point 23a. It is also possible to define only the designed detection point 23a, for example, the middle of a section connecting the eyes of an average sized user sitting in the driving position in the driver's seat is considered to be the designed detection point 23a. Another possibility is to define the designed detection point 23a for a given user in a similar way.

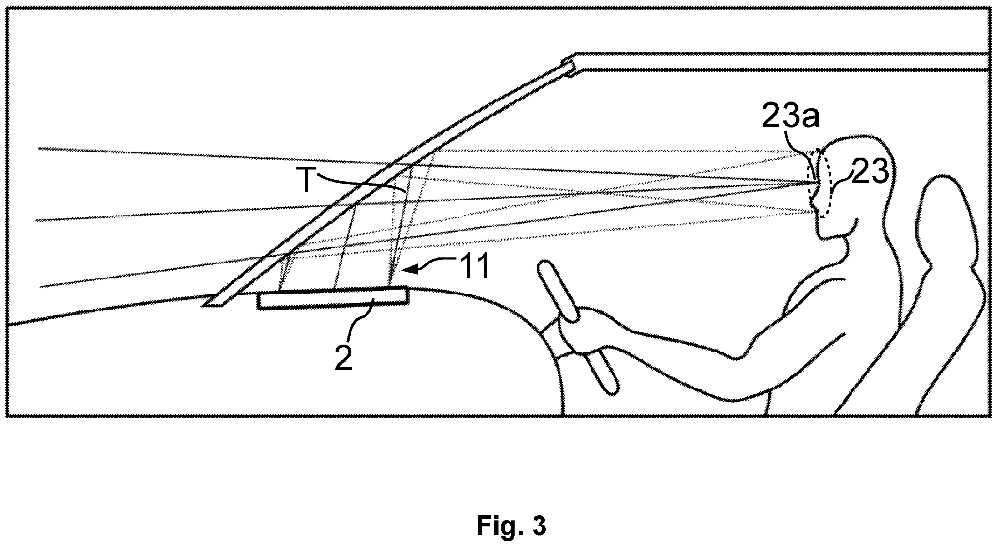

Figure 3 shows that the light cones 11 emitted from different points of the image generated by the image display device 1 arrive at the reflecting element 3 at different angles in order to meet at point 23a after reflection from the reflecting element 3. In other words, the axes T of the light cones 11 from different points in the image are at an angle to each other. Figure 3 also shows how the light cones 11 illuminate and create the area 23. This shows that the shape of the area 23 is determined by the cross-section of the light cones 11. For example, for light cones with a circular or rectangular cross-section, the are 23 will also be essentially circular or rectangular, respectively.

The system 100 according to the invention comprises a direction-selective light filter 20 arranged in a light path between the image display device 1 and the reflecting element 3, in which direction-selective light filter 20 a plurality of light guiding channels 22 through the direction-selective light filter 20 is formed. In the context of the present invention, the light filter 20 is understood to be an optical element that is opaque to light and through which light can pass only through the channels 22 formed therein. The direction-selective light filter 20 may be formed, for example, from a microscopically rough material such as a black polymer, preferably polyamide. In a particularly preferred embodiment, the light filter 20 is at least configured to absorb light rays incident on its surface 20a opposite the image display device 1. An other surface 20b of the light filter 20 facing the image display device 1 may also be configured to absorb light rays. Such light absorption may be achieved, for example, by coating the surface 20a with a light absorbing material (e.g., a paint called Vantablack™) and/or by microstructuring the surface 20a accordingly (e.g., by coating it with a light absorbing surface thin film or microstructure), as is known to the skilled person. Preferably, the light filter 20 is dimensioned to obscure the image display device 1 (e.g., the screen 2) over its entire surface area when viewed from the designed detection area 23.

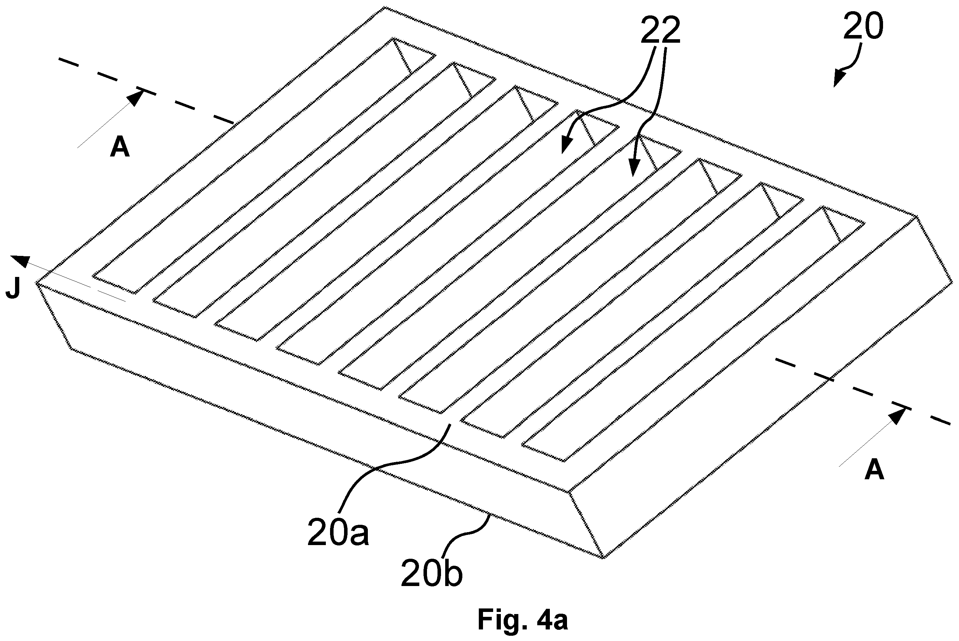

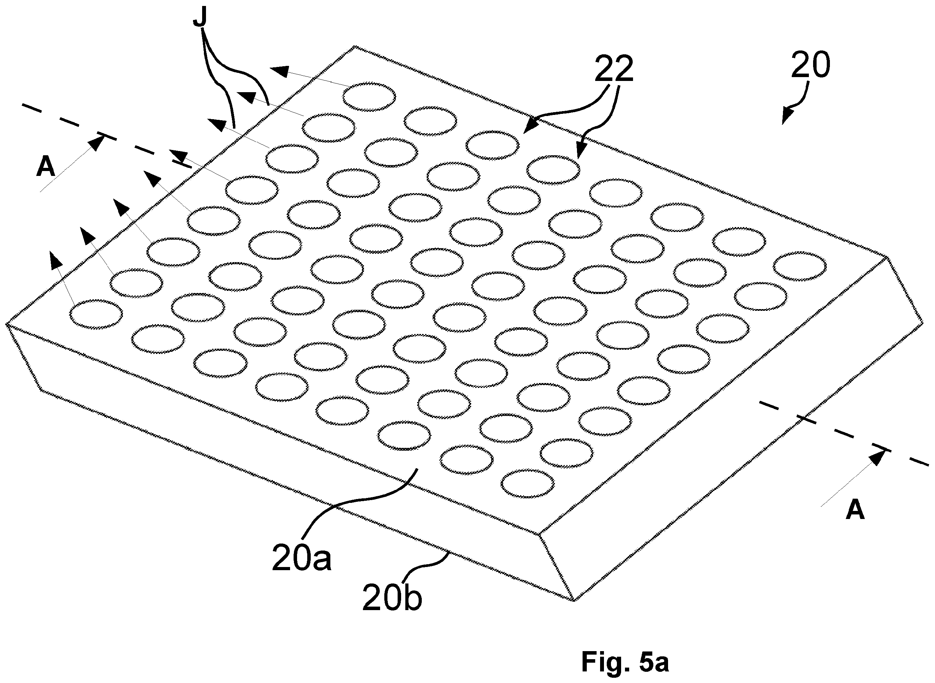

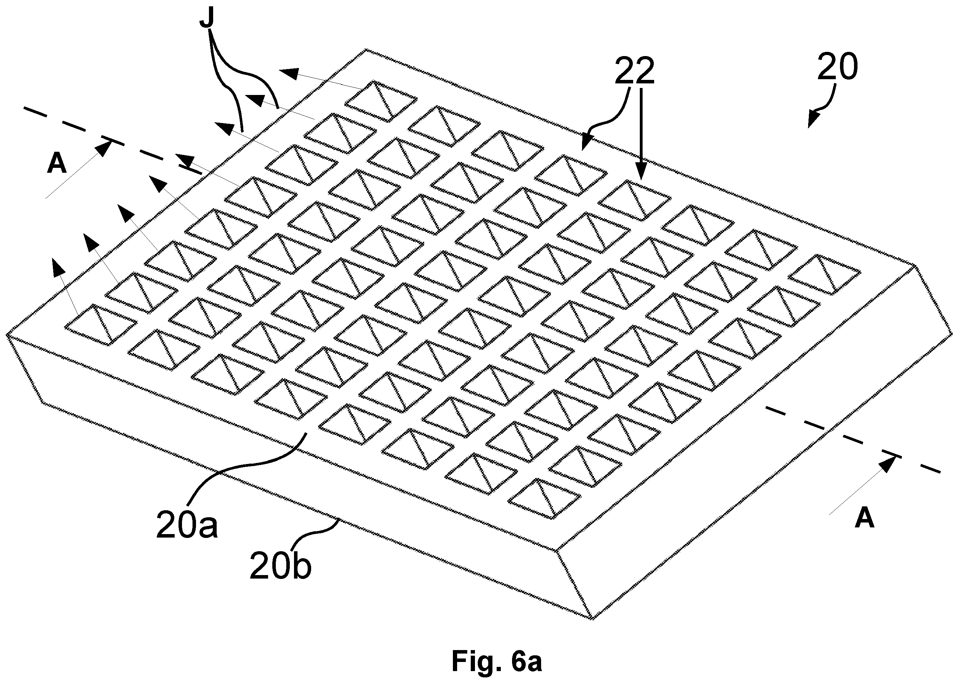

The light guiding channels 22 according to the invention pass through the light filter 20, providing a passage for light between the two opposite side surfaces 20a, 20b of the light filter 20. The channels 22 each have an inlet aperture 22b at the surface 20b and an outlet aperture 22a at the surface 20a. The cross-sections of the channels 22 may be, for example, rectangular, circular or square as shown in Figures 4a, 5a and 6a, respectively. The channels 22 may be formed using material extraction technologies, for example by etching the light filter 20, or optionally by material addition technologies, for example by 3-dimensional printing, casting of the walls of the channels 22, or by creating, for example, photonic crystal, diffractive structure, micro-lens and aperture matrix, etc., as known to the skilled person.

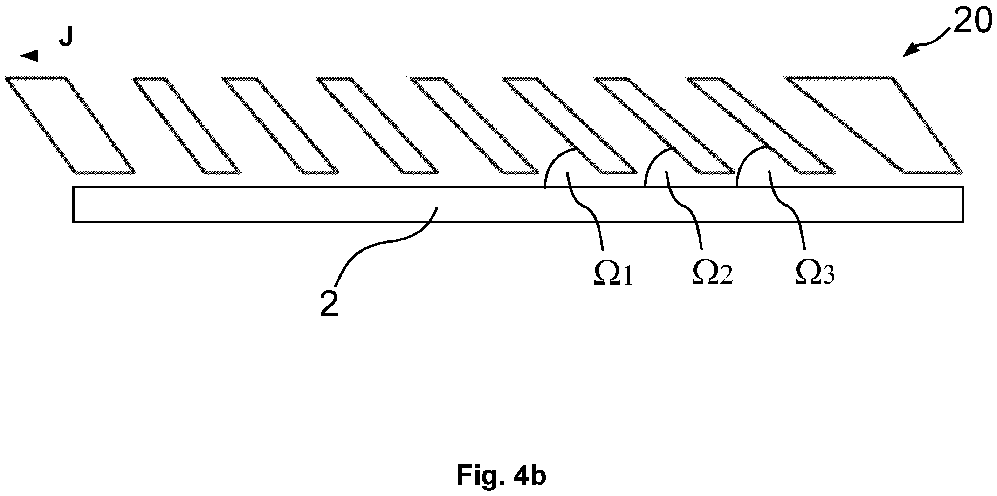

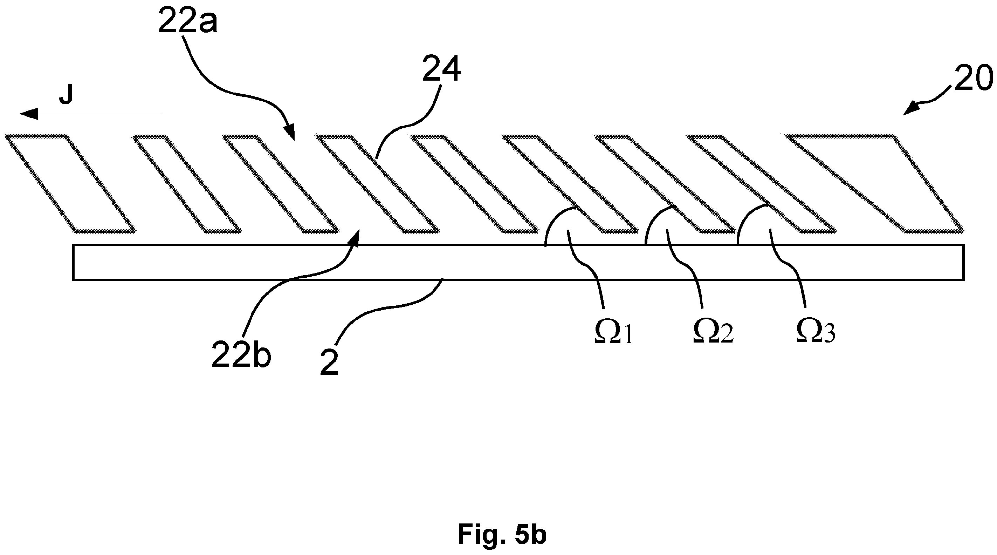

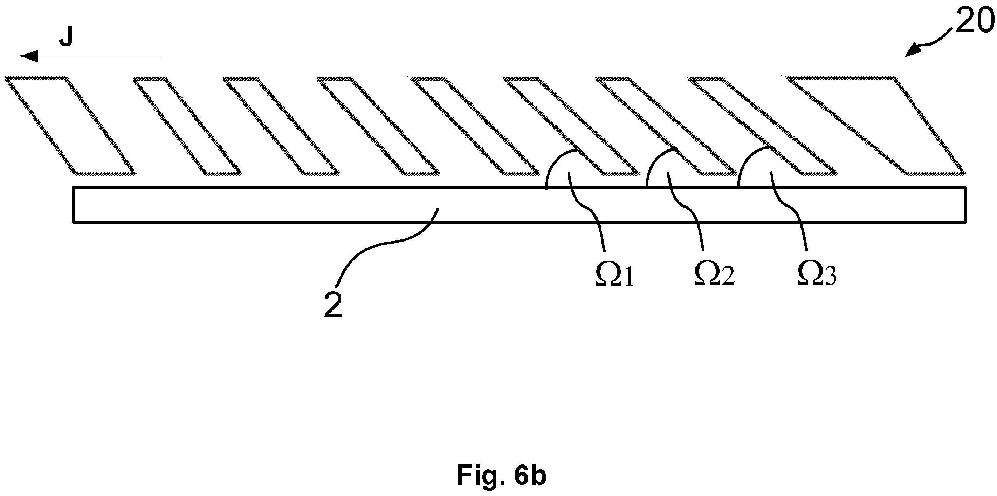

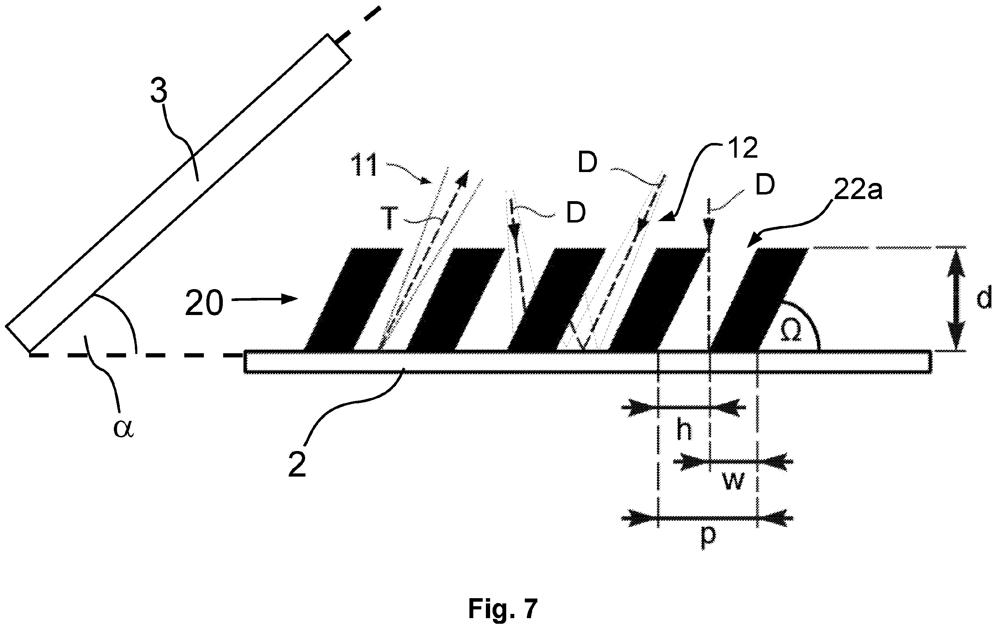

Each of the channels 22 is configured in a manner substantially passing the imaging light cones 11 entering the respective channel 22, and substantially blocking the reflection light cones 12 reflected by the image display device 1 towards the reflecting element 3, which have axes D at different angles to the axes T of the imaging cones 11. The path of the light cones 11, 12 entering the channels 22 is illustrated in Figure 7. As can be seen, the light cones 11 enter the channel 22 through aperture 22b and exit through aperture 22a. Each of the channels 22 is configured such that the inclination angle of the respective channel 22 is substantially equal to the inclination angle of the axes T of the light cones 11 passing through the respective channel 22 in an inclination direction J of the channel 22. In the context of the present description, the inclination angle of the channel 22 is understood to be the angle of the axis of the channel 22 with respect to the image display device 1 (the screen plane in the case of a screen 2 embodiment, or the image plane in the case of a mirror embodiment). As mentioned earlier, the directions of the axes T of the light cones 11 emanating from the different pixels are different, and therefore the channels 22 have different angles of inclination. In Figures 4b-6b, schematic cross-sectional images of the channels 22 with different embodiments are shown, where it can be observed that the inclination angles $\Omega_1$ $\Omega_2$ $\Omega_3$ of each of the channels 22 are different ($\Omega_1 > \Omega_2 > \Omega_3$). It is also noted that although the light cones 11 entering at different points of a given aperture 22b are moving in slightly different directions towards the reflecting element 3, for practical purposes the axes T of the light cones 11 entering a given channel 22 along its inclination direction J can be considered parallel to each other, as observed in Figure 7. The diameter and length of the channels 22 and the shape of the apertures 22a, 22b are preferably chosen according to the angles and the cross-sectional shapes of the light cones 11, respectively. In this way, the light cones 11 entering the aperture 22b substantially pass through the channel 22 without colliding with the walls thereof. Note that some of the light cones 11 passing close to the wall of the channel 22 are absorbed by the channel 22 due to the divergence of the light cone 11, but this is a practically negligible loss. In contrast, the light cones 12 with axes D at a different angle from the axes T, entering the channel 22 through aperture 22a, are absorbed by the wall of the channel 22 and suffer multiple reflections, which reduce their intensity. In a particularly preferred embodiment, the inner wall of the light guiding channels 22 is coated with a light absorbing material, similar to the surfaces 20a, 20b, whereby the absorption can be further increased. The surface of the image display device 1 is reached only by the light cones 12 of axis D, which are at a small angle to the axis T, or those that have undergone multiple reflections from the walls of the channels 22. Figure 7 also shows that the light cones 12 reaching and reflecting from the image display device 1 can only exit the aperture 22a at the cost of further reflections, which causes them to be practically completely absorbed or their intensity to be significantly reduced, i.e. blocked.

In view of the above, the channels 22 can be designed in a manner obvious to a person skilled in the art, knowing the parameters of the light cones 11 (e.g. the directions of the axes T, the opening angle of the light cones 11). For example, in the preferred embodiment shown in Figure 7, the channels 22 are configured such that the angle of inclination of a given channel 22 with the plane of the screen 2 is $\Omega = \alpha + \theta$ and the width h in the inclination direction J of a given channel 22 and the thickness d of the light filter 20 at a given channel 22 are such that

$$d \geq h \cdot \tan(\alpha + \theta)$$

where $\theta$ is an angle between the axis T of the imaging light cone 11 passing through the given channel 22 (e.g. in the middle of its cross-section) and the reflecting element 3, and $\alpha$ is the angle between the screen 2 and the reflecting element 3. It can be seen that in this embodiment, light incident perpendicular to the surface 20a cannot pass through the channel 22.

Since the cross-section of the light cones 11 increases as the distance from the image display device 1 increases, it is preferred to position the light filter 20 as close as possible to the image display device 1 for a given channel 22 diameter in order to achieve better light transmission. In a preferred embodiment, the direction-selective light filter 20 is therefore fixed to the surface of the screen 2. Of course, the light filter 20 may be arranged further away from the screen 2, but preferably the distance between the light filter 20 and the screen 2 is at most a few mm. It is noted that the light filter 20 typically has a flat surface, but in some cases (e.g. in the case of a system 100 with curved screen 2) a curved light filter 20 (e.g. following the curve of the screens 2) may be used.

Some of the light cones 11 emitted by the image display device 1 are blocked by channel walls 24 separating 22 channels 22, so to improve transmission it is preferred to use as thin channel walls 24 as possible. In determining the wall thicknesses, mechanical stability must be considered, whereby the light filter 20 will not collapse and will withstand the mechanical effects of normal use of the system 100.

The light guiding channels 22 are arranged in the light filter 20 such that the period distance p defined by the width h and wall thickness w of the channels 22 is at most one fifth or at least five times the pixel size of the screen 2. In this way, periodic intensity variations caused by the moiré effect are avoided. For example, the pixel size of a typical widescreen display 2 is 200 $\mu m$. The period distance p is therefore in this case preferably greater than 1 $mm$ or less than 40 $\mu m$.

The invention also relates to a method of reducing the reflection of a HUD system 100, the HUD system 100 comprising image display device 1 as described above and reflective element 3 fixed relative thereto.

In the method, imaging light cones 11 are generated from the points (pixels) of the image generated by the image display device 1. The axes T of the imaging light cones 11 are such that the light cones 11 are reflected from the reflecting element 3 and point in the direction of the designed detection point 23a. That is, the position of the axes T is determined by the relative positions of the image display device 1, the reflecting element 3 and the designed detection point 23a, and by the shape of the image display device 1 and the reflecting element 3, taking into account the rules of reflection. The light emission of the image display device 1 (the opening angles of the light cones 11 and the shape of their cross-section) is designed such that the emitted light cones 11 illuminate the designed detection 23 area just intersecting the plane passing through the detection point 23a. In a possible embodiment, the opening angle of the light cones 11 along the shorter side of the screen 2 is $\Delta\alpha$, while along the longer side of the screen 2 it is $\Delta\beta$. Thus, the light cones 11 emitted by the different pixels of the screen 2 intersect at point 23a, where they illuminate an area of the same height $A \cong L \cdot \Delta_{\alpha}$ and width $B \cong L \cdot \Delta\beta$ (where L is the distance between screen 2 and point 23a, measured along the light cones 11 reflected by the reflecting element 3). The area 23 will therefore be an area of height A and width B in this embodiment.

In the next step of the method, the propagation of reflection light cones 12 having an axis D with a different angle with respect to the axes T of the light cones 11 which are reflected from the image display device 1 in the direction of the reflecting element 3, is blocked in the light path between the image display device 1 and the reflecting element 3, by means of the direction-selective light filter 20 according to the invention described above. In one possible embodiment, the inclination angles of the light guiding channels 22 of the direction-selective light filter 20, corresponding to the axes T of the light cones 11, are determined by numerical modelling based on inverse ray tracing, as is known to the skilled person.

Various modification to the above disclosed embodiment will be apparent to a person skilled in the art without departing from the scope of protection determined by the attached claims.

## Claims

1. HUD system (100) with reduced reflection comprising an image display device (1) and a reflecting element (3) which are fixed and angled relative to each other, the image display device (1) being adapted to generate imaging light cones (11) radiating from points of an image generated thereby and reflected from the reflecting element (3), which imaging light cones (11) have their axes (T) pointing towards a designed detection point (23a) after reflection from the reflecting element (3), and wherein the imaging light cones (11) illuminate a designed detection area (23) in a plane passing through the detection point (23a), and wherein the HUD system (100) comprises a direction-selective light filter (20) arranged in the light path between the image display device (1) and the reflecting element (3), in which direction-selective light filter (20) a plurality of light guiding channels (22) passing through the direction-selective light filter (20) are arranged such that each of the channels (22) is configured in such a way as to substantially pass imaging light cones (11) entering that channel (22), and to substantially block reflection light cones (12) reflected by the image display device (1) towards the reflecting element (3), which have axes (D) at different angles to the axes (T) of the imaging cones (11), wherein the image display device (1) is configured as a screen (2) closing an angle $\alpha$ with the reflecting element (3), and **characterised in that** the light guiding channels (22) are arranged in the direction-selective light filter (20) in such a way that the period distance (p) defined by the width (h) and the wall thickness (w) of the light guiding channels (22) is at most one fifth or at least five times the pixel size of the screen (2).

2. The HUD system (100) according to claim 1, **characterized in that** the screen (2) is configured as a direction-selective light emitting screen (2) configured to generate the imaging light cones (11).

3. The HUD system (100) according to claim 1 or 2, **characterized in that** the screen (2) and the reflecting element (3) are arranged relative to each other in such a way that the axis (T) of each of the imaging light cones (11) makes an angle other than a right angle with a plane of the screen (2).

4. The HUD system (100) according to any one of claims 1 to 3, **characterized in that** the light guiding channels (22) are configured such that an angle of inclination of a given channel (22) with the plane of the screen (2) makes an angle $\Omega = \alpha + \theta$ and a width

(h) in a direction of inclination (J) of the given channel (22) and a thickness (d) of the direction-selective light filter (20) at the given channel (22) are such that

$$d \geq h \cdot \tan(\alpha + \theta)$$

where $\theta$ is an angle between the axis (T) of the imaging light cone (11) passing through the given channel (22) and the reflecting element (3).

5. The HUD system (100) according to any one of claims 1 to 4, **characterized in that** the direction-selective light filter (20) is fixed to the surface of the screen (2).

6. The HUD system (100) according to any one of claims 1 to 5, **characterized in that** the light guiding channels (22) have a cross-section that is circular or square or rectangular.

7. The HUD system (100) according to any one of claims 1 to 6, **characterized in that** the direction-selective light filter (20) is configured to absorb light rays incident on a surface opposite to the image display device (1).

8. The HUD system (100) according to claim 7, **characterized in that** the direction-selective light filter (20) is coated with a light absorbing material on a surface opposite to the image display device (1).

9. The HUD system (100) according to any one of claims 1 to 8, **characterized in that** an inner wall of the light guiding channels (22) is coated with a light absorbing material.

10. The HUD system (100) according to any one of claims 1 to 9, **characterized in that** the light guiding channels (22) are etched in the direction selective light filter (20).

11. The HUD system (100) according to any one of claims 1 to 10, **characterized in that** the direction-selective light filter (20) is made of a light absorbing microscopically rough material, preferably a black polymer.

12. The HUD system (100) according to any one of claims 1 to 10, **characterized in that** the direction-selective light filter (20) is coated with a light absorbing surface thin film or microstructure.

13. A method of reducing the reflection of a HUD system (100), the HUD system (100) comprising an image display device (1) and a reflective element (3) fixed relative thereto, the method comprises the steps of: using the image display device (1), generating imaging light cones (11) radiating from points of an image generated by the image display device (1) in such a way that axes (T) of the imaging light cones (11), reflected from the reflecting element (3), point in the direction of a designed detection point (23a), and the shape of the imaging light cones (11) is chosen to illuminate a designed detection area (23) in a plane passing through the detection point (23a), **characterized in that** the image display device (1) is configured as a screen (2), and in the light path between the image display device (1) and the reflecting element (3), blocking the propagation of reflecting light cones (12) reflected from the image display device (1) in the direction of the reflecting element (3) and having an axis (D) at a different angle to the axes (T) of the imaging light cones (11) by means of a direction-selective light filter (20) according to any one of claims 1 to 12.

14. The method according to claim 13, **characterized in that** inclination angles of the light guiding channels (22) of the direction-selective light filter (20) are determined by numerical modelling based on inverse ray tracing.

**Patentansprüche**

1. HUD-System (100) mit verringerter Reflexion, umfassend eine Bildanzeigevorrichtung (1) und ein Reflexionselement (3), die relativ zueinander festgelegt und abgewinkelt sind, wobei die Bildanzeigevorrichtung (1) dazu eingerichtet ist, Abbildungslichtkegel (11) zu erzeugen, die von Punkten eines dadurch erzeugten Bildes ausstrahlen und von dem Reflexionselement (3) reflektiert werden, wobei die Abbildungslichtkegel (11) Achsen (T) aufweisen, die nach Reflexion an dem Reflexionselement (3) zu einem vorgesehenen Detektionspunkt (23a) weisen, und wobei die Abbildungslichtkegel (11) einen vorgesehenen Detektionsbereich (23) in einer durch den Detektionspunkt (23a) verlaufenden Ebene beleuchten, und wobei das HUD-System (100) einen richtungsselektiven Lichtfilter (20) umfasst, der im Lichtweg zwischen der Bildanzeigevorrichtung (1) und dem Reflexionselement (3) angeordnet ist, wobei in dem richtungsselektiven Lichtfilter (20) eine Mehrzahl von Lichtleitkanälen (22), die durch den richtungsselektiven Lichtfilter (20) hindurch verlaufen, derart angeordnet ist, dass jeder der Kanäle (22) dazu eingerichtet ist, in diesen Kanal (22) eintretende Abbildungslichtkegel (11) im Wesentlichen durchzulassen und Reflexionslichtkegel (12), die von der Bildanzeigevorrichtung (1) zu dem Reflexionselement (3) reflektiert werden und Achsen (D) aufweisen, die unter anderen Winkeln als die Achsen (T) der Abbildungslichtkegel (11) verlaufen, im Wesentlichen zu blockieren, wobei die Bildanzeigevorrichtung (1) als ein Bildschirm (2) ausgestaltet ist, der mit dem Reflexionselement (3) einen Winkel α einschließt, **dadurch gekennzeichnet, dass** die Lichtleitkanäle (22) in dem richtungsselektiven Lichtfilter (20) derart angeordnet sind, dass der durch die Breite (h) und die Wanddicke (w) der Lichtleitkanäle (22) definierte Periodenabstand (p) höchstens ein Fünftel oder mindestens das Fünffache der Pixelgröße des Bildschirms (2) beträgt.

2. HUD-System (100) nach Anspruch 1, **dadurch gekennzeichnet, dass** der Bildschirm (2) als ein richtungsselektiver lichtemittierender Bildschirm (2) ausgestaltet ist, der dazu eingerichtet ist, die Abbildungslichtkegel (11) zu erzeugen.

3. HUD-System (100) nach Anspruch 1 oder 2, **dadurch gekennzeichnet, dass** der Bildschirm (2) und das Reflexionselement (3) relativ zueinander derart angeordnet sind, dass die Achse (T) jedes der Abbildungslichtkegel (11) mit einer Ebene des Bildschirms (2) einen von einem rechten Winkel verschiedenen Winkel einschließt.

4. HUD-System (100) nach einem der Ansprüche 1 bis 3, **dadurch gekennzeichnet, dass** die Lichtleitkanäle (22) derart ausgestaltet sind, dass ein Neigungswinkel eines gegebenen Kanals (22) bezüglich der Ebene des Bildschirms (2) Ω = α + θ beträgt und eine Breite (h) in einer Neigungsrichtung (J) des gegebenen Kanals (22) und eine Dicke (d) des richtungsselektiven Lichtfilters (20) an dem gegebenen Kanal (22) derart sind, dass

$$d \geq h \cdot \tan(\alpha + \theta)$$

wobei θ ein Winkel zwischen der Achse (T) des durch den gegebenen Kanal (22) verlaufenden Abbildungslichtkegels (11) und dem Reflexionselement (3) ist.

5. HUD-System (100) nach einem der Ansprüche 1 bis 4, **dadurch gekennzeichnet, dass** der richtungsselektive Lichtfilter (20) an der Oberfläche des Bildschirms (2) befestigt ist.

6. HUD-System (100) nach einem der Ansprüche 1 bis 5, **dadurch gekennzeichnet, dass** die Lichtleitkanäle (22) einen Querschnitt aufweisen, der kreisförmig oder quadratisch oder rechteckig ist.

7. HUD-System (100) nach einem der Ansprüche 1 bis 6, **dadurch gekennzeichnet, dass** der richtungsselektive Lichtfilter (20) dazu ausgestaltet ist, auf eine der Bildanzeigevorrichtung (1) gegenüberliegende Oberfläche einfallende Lichtstrahlen zu absorbieren.

8. HUD-System (100) nach Anspruch 7, **dadurch gekennzeichnet, dass** der richtungsselektive Lichtfilter (20) auf einer der Bildanzeigevorrichtung (1) gegenüberliegenden Oberfläche mit einem lichtabsorbierenden Material beschichtet ist.

9. HUD-System (100) nach einem der Ansprüche 1 bis 8, **dadurch gekennzeichnet, dass** eine Innenwand der Lichtleitkanäle (22) mit einem lichtabsorbierenden Material beschichtet ist.

10. HUD-System (100) nach einem der Ansprüche 1 bis 9, **dadurch gekennzeichnet, dass** die Lichtleitkanäle (22) in den richtungsselektiven Lichtfilter (20) geätzt sind.

11. HUD-System (100) nach einem der Ansprüche 1 bis 10, **dadurch gekennzeichnet, dass** der richtungsselektive Lichtfilter (20) aus einem lichtabsorbierenden mikroskopisch rauen Material, vorzugsweise einem schwarzen Polymer, hergestellt ist.

12. HUD-System (100) nach einem der Ansprüche 1 bis 10, **dadurch gekennzeichnet, dass** der richtungsselektive Lichtfilter (20) mit einem lichtabsorbierenden Oberflächendünnfilm oder einer lichtabsorbierenden Mikrostruktur beschichtet ist.

13. Verfahren zur Verringerung der Reflexion eines HUD-Systems (100), wobei das HUD-System (100) eine Bildanzeigevorrichtung (1) und ein relativ dazu festgelegtes Reflexionselement (3) umfasst, wobei das Verfahren die folgenden Schritte umfasst: mittels der Bildanzeigevorrichtung (1), Erzeugen von Abbildungslichtkegeln (11), die von Punkten eines von der Bildanzeigevorrichtung (1) erzeugten Bildes derart ausstrahlen, dass Achsen (T) der Abbildungslichtkegel (11), die von dem Reflexionselement (3) reflektiert werden, in Richtung eines vorgesehenen Detektionspunkts (23a) weisen, und wobei die Form der Abbildungslichtkegel (11) ausgewählt wird, um einen vorgesehenen Detektionsbereich (23) in einer durch den Detektionspunkt (23a) verlaufenden Ebene zu beleuchten, **dadurch gekennzeichnet, dass** die Bildanzeigevorrichtung (1) als ein Bildschirm (2) ausgestaltet ist und dass im Lichtweg zwischen der Bildanzeigevorrichtung (1) und dem Reflexionselement (3) die Ausbreitung von Reflexionslichtkegeln (12), die von der Bildanzeigevorrichtung (1) in Richtung des Reflexionselements (3) reflektiert werden und eine Achse (D) aufweisen, die unter einem anderen Winkel als die Achsen (T) der Abbildungslichtkegel (11) verläuft, mittels eines richtungsselektiven Lichtfilters (20) nach einem der Ansprüche 1 bis 12 blockiert wird.

14. Verfahren nach Anspruch 13, **dadurch gekennzeichnet, dass** Neigungswinkel der Lichtleitkanäle (22) des richtungsselektiven Lichtfilters (20) durch numerische Modellierung auf der Grundlage inverser Strahlverfolgung bestimmt werden.

## Revendications

1. Système HUD (100) à réflexion réduite, comprenant un dispositif d'affichage d'image (1) et un élément réfléchissant (3), qui sont fixés et disposés angulairement l'un par rapport à l'autre, le dispositif d'affichage d'image (1) étant adapté à générer des cônes lumineux d'imagerie (11) rayonnant à partir de points d'une image générée par celui-ci et réfléchis par l'élément réfléchissant (3), lesdits cônes lumineux d'imagerie (11) ayant leurs axes (T) dirigés vers un point de détection prévu (23a) après réflexion par l'élément réfléchissant (3), et dans lequel les cônes lumineux d'imagerie (11) éclairent une zone de détection prévue (23) dans un plan passant par le point de détection (23a), et dans lequel le système HUD (100) comprend un filtre de lumière sélectif en direction (20) disposé dans le trajet lumineux entre le dispositif d'affichage d'image (1) et l'élément réfléchissant (3), dans lequel filtre de lumière sélectif en direction (20) une pluralité de canaux de guidage de lumière (22) traversant le filtre de lumière sélectif en direction (20) sont agencés de telle sorte que chacun des canaux (22) est configuré de manière à laisser sensiblement passer des cônes lumineux d'imagerie (11) entrant dans ledit canal (22), et à bloquer sensiblement des cônes lumineux de réflexion (12), réfléchis par le dispositif d'affichage d'image (1) vers l'élément réfléchissant (3) et présentant des axes (D) orientés sous des angles différents par rapport aux axes (T) des cônes lumineux d'imagerie (11), dans lequel le dispositif d'affichage d'image (1) est configuré comme un écran (2) formant un angle α avec l'élément réfléchissant (3), **caractérisé en ce que** les canaux de guidage de lumière (22) sont agencés dans le filtre de lumière sélectif en direction (20) de telle sorte que la distance de période (p) définie par la largeur (h) et l'épaisseur de paroi (w) des canaux de guidage de lumière (22) est au plus égale à un cinquième ou au moins égale à cinq fois la taille de pixel de l'écran (2).

2. Système HUD (100) selon la revendication 1, **caractérisé en ce que** l'écran (2) est configuré comme un écran émetteur de lumière sélectif en direction (2) configuré pour générer les cônes lumineux d'imagerie (11).

3. Système HUD (100) selon la revendication 1 ou 2, **caractérisé en ce que** l'écran (2) et l'élément réfléchissant (3) sont agencés l'un par rapport à l'autre de telle sorte que l'axe (T) de chacun des cônes lumineux d'imagerie (11) forme, avec un plan de l'écran (2), un angle différent d'un angle droit.

4. Système HUD (100) selon l'une quelconque des revendications 1 à 3, **caractérisé en ce que** les canaux de guidage de lumière (22) sont configurés de telle sorte qu'un angle d'inclinaison d'un canal donné (22) avec le plan de l'écran (2) forme un angle Ω = α + θ et qu'une largeur (h) dans une direction d'inclinaison (J) du canal donné (22) et une épaisseur (d) du filtre de lumière sélectif en direction (20) au niveau du canal donné (22) sont telles que

$$d \geq h \cdot \tan(\alpha + \theta)$$

où θ est un angle entre l'axe (T) du cône lumineux d'imagerie (11) passant à travers le canal donné (22) et l'élément réfléchissant (3).

5. Système HUD (100) selon l'une quelconque des revendications 1 à 4, **caractérisé en ce que** le filtre de lumière sélectif en direction (20) est fixé à la surface de l'écran (2).

6. Système HUD (100) selon l'une quelconque des revendications 1 à 5, **caractérisé en ce que** les canaux de guidage de lumière (22) ont une section transversale qui est circulaire ou carrée ou rectangulaire.

7. Système HUD (100) selon l'une quelconque des revendications 1 à 6, **caractérisé en ce que** le filtre de lumière sélectif en direction (20) est configuré pour absorber des rayons lumineux incidents sur une surface opposée au dispositif d'affichage d'image (1).

8. Système HUD (100) selon la revendication 7, **caractérisé en ce que** le filtre de lumière sélectif en direction (20) est revêtu d'un matériau absorbant la lumière sur une surface opposée au dispositif d'affichage d'image (1).

9. Système HUD (100) selon l'une quelconque des revendications 1 à 8, **caractérisé en ce qu'**une paroi intérieure des canaux de guidage de lumière (22) est revêtue d'un matériau absorbant la lumière.

10. Système HUD (100) selon l'une quelconque des revendications 1 à 9, **caractérisé en ce que** les canaux de guidage de lumière (22) sont gravés dans le filtre de lumière sélectif en direction (20).

11. Système HUD (100) selon l'une quelconque des revendications 1 à 10, **caractérisé en ce que** le filtre de lumière sélectif en direction (20) est constitué d'un matériau microscopiquement rugueux absorbant la lumière, de préférence d'un polymère noir.

**12.** Système HUD (100) selon l'une quelconque des revendications 1 à 10, **caractérisé en ce que** le filtre de lumière sélectif en direction (20) est revêtu d'un film mince de surface absorbant la lumière ou d'une microstructure absorbant la lumière.

**13.** Procédé de réduction de la réflexion d'un système HUD (100), le système HUD (100) comprenant un dispositif d'affichage d'image (1) et un élément réfléchissant (3) fixé par rapport à celui-ci, le procédé comprenant les étapes consistant à :
au moyen du dispositif d'affichage d'image (1), générer des cônes lumineux d'imagerie (11) rayonnant à partir de points d'une image générée par le dispositif d'affichage d'image (1) de telle sorte que des axes (T) des cônes lumineux d'imagerie (11), réfléchis par l'élément réfléchissant (3), soient dirigés vers un point de détection prévu (23a), et la forme des cônes lumineux d'imagerie (11) étant choisie pour éclairer une zone de détection prévue (23) dans un plan passant par le point de détection (23a), **caractérisé en ce que** le dispositif d'affichage d'image (1) est configuré comme un écran (2), et **en ce que**, dans le trajet lumineux entre le dispositif d'affichage d'image (1) et l'élément réfléchissant (3), la propagation de cônes lumineux de réflexion (12), réfléchis par le dispositif d'affichage d'image (1) en direction de l'élément réfléchissant (3) et présentant un axe (D) orienté sous un angle différent par rapport aux axes (T) des cônes lumineux d'imagerie (11), est bloquée au moyen d'un filtre de lumière sélectif en direction (20) selon l'une quelconque des revendications 1 à 12.

**14.** Procédé selon la revendication 13, **caractérisé en ce que** des angles d'inclinaison des canaux de guidage de lumière (22) du filtre de lumière sélectif en direction (20) sont déterminés par modélisation numérique sur la base d'un traçage inverse de rayons.

Fig. 1a

**Fig. 1b**

EP 4 327 157 B1

**Fig. 2a**

EP 4 327 157 B1

**Fig. 2b**

**Fig. 3**

EP 4 327 157 B1

**Fig. 4a**

**Fig. 4b**

EP 4 327 157 B1

**Fig. 5a**

**Fig. 5b**

EP 4 327 157 B1

Fig. 6a

**Fig. 6b**

EP 4 327 157 B1

**Fig. 7**

EP 4 327 157 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140063359 A1